# EUROPEAN PATENT SPECIFICATION

(11) **EP 2 873 707 B1**
(45) Date of publication and mention of the grant of the patent: **25.10.2017**
(21) Application number: 13816681.4
(22) Date of filing: 02.04.2013
(51) Int. Cl.: B32B 5/02, B32B 7/04, B32B 7/12, B32B 27/12, B32B 27/14, B32B 27/32, B32B 3/18, C09J 7/02

(54) **WATERPROOF TAPE AND PROCESS FOR PRODUCING SAME**
WASSERFESTES BAND UND VERFAHREN ZU SEINER HERSTELLUNG
RUBAN RÉSISTANT À L'EAU ET SON PROCÉDÉ DE PRODUCTION

(30) Priority: 11.07.2012 JP 2012155740
(43) Date of publication of application: 20.05.2015
(73) Proprietor: Nitto Boseki Co., Ltd, Fukushima-shi, Fukushima 960-8161 (JP)
(72) Inventor: HAYASHI Ouhiro, Itami-shi Hyogo 664-8501 (JP); NOTSU Toshio, Itami-shi Hyogo 664-8501 (JP)
(74) Representative: Vossius & Partner Patentanwälte Rechtsanwälte mbB
(86) International application number: PCT/JP2013/060083
(87) International publication number: WO 2014/010279

(56) References cited:
- JP-A- H11 152 638
- JP-A- H11 152 638
- JP-A- 2001 329 466
- JP-A- 2001 329 466
- JP-A- 2007 084 627
- JP-A- 2007 084 627
- JP-A- 2009 219 786
- JP-A- 2009 219 786

## Description

### Technical Field

The present invention relates to a waterproof tape and a process for producing the same.

### Background Art

In textile products requiring waterproof properties such as a windbreaker for sports or a raincoat, a tape is used that includes a layered product in which a woven fabric is laminated on one side of a waterproof film and an adhesive layer is laminated on the other side of the waterproof film (e.g., Patent Literature 1). Such a tape is used for a joint such as a stitch and a seam of fabric to prevent rainwater from coming inside from the joint.

### Citation List

### Patent Literature

[Patent Literature 1] Japanese Patent Application Laid-Open Publication No. 2007-84627
[Patent literature 2] JP 2007 084627 A
[Patent literature 3] JP H11 152638 A
[Patent literature 4] JP 2001 329466 A

### Summary of Invention

### Technical Problem

In recent years, needs for further weight reduction (thickness reduction) of layered products having waterproof properties have been increasing. In a conventional technique described in Patent Literature 1 above, weight is reduced by using a thin woven fabric. However, because the following problems occur when thickness of such a woven fabric is reduced, there are limitations to the thickness reduction. As the first problem, (1) adhesive strength between a waterproof film and a woven fabric decreases. As the second problem, (2) distortion and slippage of yarn easily occur in the woven fabric when the woven fabric is laminated on the waterproof film. It is desired to solve these problems (1) and (2), and also to further reduce thickness (reduce weight) of the woven fabric.

The present invention has been made to solve these problems, and aims to provide a waterproof tape and a process for producing the waterproof tape that enable weight reduction while preventing distortion and slippage of yarn from occurring when a waterproof film and a woven fabric are bonded together and also securing adhesive strength between the waterproof film and the woven fabric.

### Solution to Problem

One aspect of the present invention relates to a waterproof tape. This waterproof tape is a waterproof tape including a layered product in which a base fabric is laminated on one side of a waterproof film and an adhesive layer is formed on the other side of the waterproof film. The base fabric is a woven fabric that has a mass per unit area of 2 g/m² to 10 g/m² and is fixed with a resin A in a dot pattern. The resin A herein is any of a resin formed by curing a resin (a1), a resin (a2), or a resin formed by crosslinking the resin (a2). The resin (a1) is a thermoset resin that is uncured or half-cured and has a melting point of 80°C to 160°C. The resin (a2) is a thermoplastic resin having a melting point of 80°C to 160°C. A melting point of the thermoplastic resin B is lower than the melting point of the resin A by 5°C to 40°C.

The woven fabric and the waterproof film are bonded together with the resin A and a thermoplastic resin B, and the adhesive layer is formed of a thermoplastic resin C.

In this waterproof tape, because the base fabric is a woven fabric having a mass per unit area of 2 g/m² to 10 g/m² and is fixed with the resin A, occurrence of distortion and slippage of yarn of the woven fabric is prevented despite its light weight. Because the woven fabric and the waterproof film are bonded together with the resin A fixing the woven fabric and with the thermoplastic resin B that is different from the resin A, sufficient adhesive strength can be secured.

In the waterproof tape according to one aspect of the present invention, the melting point of the thermoplastic resin B may be lower than the melting point of the resin A by 5°C to 40°C. When the difference in the melting point between these resins is in this temperature range, the distortion and slippage of yarn of the woven fabric can be more prevented, and also the woven fabric and the waterproof film can be more strongly bonded together.

In the waterproof tape according to one aspect of the present invention, an occupancy rate A that is the ratio of the area of the resin A per unit area may be 1% to 20%. When the occupancy rate A is in this range, a waterproof tape can be obtained that can sufficiently secure the adhesive strength between the woven fabric and the waterproof film and is excellent in flexibility, and further this waterproof tape has moisture permeability.

In the waterproof tape according to one aspect of the present invention, an occupancy rate B that is the ratio of the area of the thermoplastic resin B per unit area may be 5% to 60%, and the thermoplastic resin B may bond the woven fabric and the waterproof film together in a dot pattern. When the occupancy rate B is in this range, a waterproof tape can be obtained that can sufficiently secure the adhesive strength between the woven fabric and the waterproof film and is excellent in flexibility, and further this waterproof tape has moisture permeability. If the occupancy rate A of the resin A and the occupancy rate B of the thermoplastic resin B are in the above-described ranges, a layered product can be obtained that has more excellent adhesive strength, flexibility, and moisture permeability.

In the waterproof tape according to one aspect of the present invention, a value (M1/M2) when mass M1 of warps extending in a longitudinal direction of the woven fabric is divided by mass M2 of wefts extending in a latitudinal direction of the woven fabric or the inverse (M2/M1) of the value may be 1.5 to 5.0.

Another aspect of the present invention relates to a process for producing a waterproof tape. This process for producing a waterproof tape, by which the above-described waterproof tape is produced, is a process for producing a waterproof tape including a layered product in which a base fabric is laminated on one side of a waterproof film and an adhesive layer is formed on the other side of the waterproof film. The process includes: a laminating step of laminating together the base fabric that is a woven fabric fixed with a resin A in a dot pattern and the waterproof film by bonding the base fabric and waterproof film together with the resin A having a dot pattern and a thermoplastic resin B; an adhesive-layer forming step of forming an adhesive layer by applying a thermoplastic resin C to the other side of the waterproof film; and a slitting step of slitting the layered product into desired widths. The woven fabric has a mass per unit area of 2 g/m² to 10 g/m².

The resin A herein is a resin (a1) that is a thermoset resin that is uncured or half-cured and has a melting point of 80°C to 160°C, or a resin (a2) that is a thermoplastic resin having a melting point of 80°C to 160°C. Through the laminating step, the resin A becomes a resin into which the resin (a1) is cured when the resin A is the resin (a1), and the resin A becomes the resin (a2) or a resin into which the resin (a2) is crosslinked when the resin A is the resin (a2).

In this process for producing a waterproof tape, because the woven fabric is fix-treated with the resin A in a dot pattern before the laminating step, the distortion and slippage of yarn in the woven fabric can be prevented at the laminating step even for a thin woven fabric. Because the woven fabric is fixed with the resin A in a dot pattern, also the woven fabric and the waterproof film are bonded together in a dot pattern, and further the woven fabric and the waterproof film are bonded together with the thermoplastic resin B in a dot pattern or in a whole surface after the laminating step, both of the woven fabric and the waterproof film can be strongly bonded.

### Advantageous Effects of Invention

With the present invention, a waterproof tape and a process for producing the waterproof tape can be provided that enable weight reduction while preventing distortion and slippage of yarn in a woven fabric from occurring when a waterproof film and the woven fabric are bonded together and also securing adhesive strength between the waterproof film and the woven fabric.

### Brief Description of Drawings

[Fig. 1] Fig. 1 is an enlarged schematic sectional view illustrating a waterproof tape according to an embodiment of the present invention.
[Fig. 2] Fig. 2 is an enlarged schematic plan view of a base fabric of the waterproof tape according to the embodiment of the present invention.
[Fig. 3] Fig. 3 is a schematic diagram illustrating a process for producing a waterproof tape according to the embodiment of the present invention.
[Fig. 4] Fig. 4 is a plan view illustrating a state in which the waterproof tape is bonded on a clothing base fabric.
[Fig. 5] Fig. 5 is an enlarged schematic sectional view illustrating a waterproof tape according to a second embodiment of the present invention.
[Fig. 6] Fig. 6 is a table listing specifications and evaluation results of waterproof tapes according to Examples 1 to 8 and Comparative Examples 1 and 2.

### Description of Embodiments

Embodiments of the present invention will now be described with reference to the drawings. It should be noted that like numerals refer to like or equivalent elements, and duplicated explanations are omitted. The dimensional proportion of the drawings does not always match those in the descriptions.

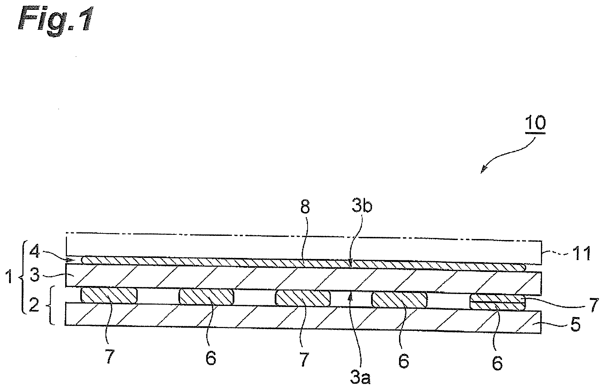

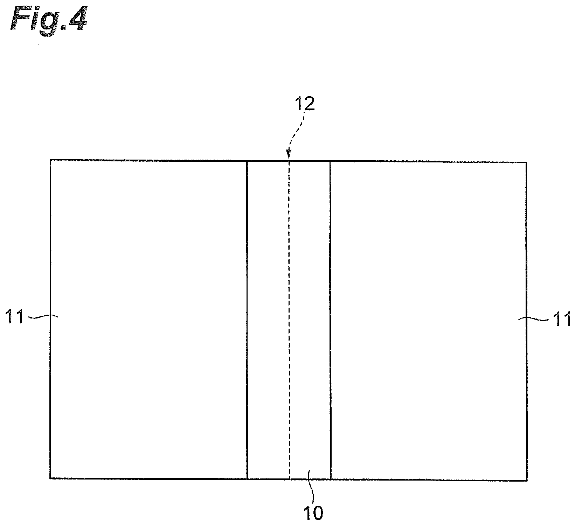

Fig. 1 is an enlarged schematic sectional view illustrating a cross-section orthogonal to a longitudinal direction of a waterproof tape according to an embodiment of the present invention. This waterproof tape 10 depicted in Fig. 1 includes a layered product 1 having a base fabric 2, a waterproof moisture-permeable film 3, and an adhesive-resin layer 4 (adhesive layer). In the layered product 1, the base fabric 2 is laminated on one side 3a of the waterproof moisture-permeable film 3, and the adhesive-resin layer 4 is formed on the other side 3b of the waterproof moisture-permeable film 3. The waterproof tape 10 is used for a windbreaker or a raincoat, for example, being arranged so as to cover a joint (e.g., seam line 12) of a clothing base fabric 11 (see Fig. 4), and can be used as a tape member for sealing the joint.

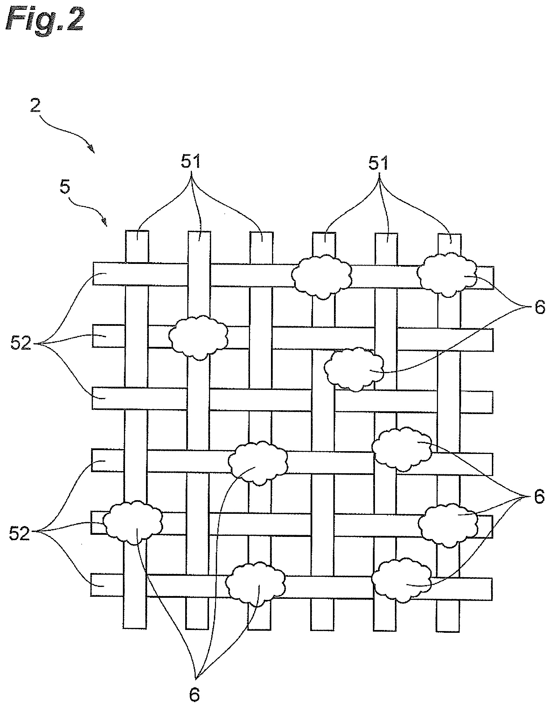

The base fabric 2 is a fabric in which a woven fabric 5 is fixed with a resin A 6 in a dot pattern. In the layered product 1 of the waterproof tape 10, with the resin A 6, warps 51 (see Fig. 2) and/or wefts 52 of the woven fabric 5 are fixed in a dot pattern, and also the woven fabric 5 and the waterproof moisture-permeable film 3 are bonded together in a dot pattern.

The woven fabric 5 and the waterproof moisture-permeable film 3 are bonded together with the resin A 6 and the thermoplastic resin B 7.

The adhesive-resin layer 4 is formed of the thermoplastic resin C 8. The thermoplastic resin C 8 bonds the clothing base fabric 11 to which the waterproof tape 10 is glued and the waterproof moisture-permeable film 3 together.

Fig. 2 is an enlarged schematic plan view of a base fabric of the waterproof tape according to the embodiment of the present invention. The woven fabric 5 of the base fabric 2 is a thin woven fabric that includes the warps 51 and the wefts 52 and has a mass per unit area of 2 g/m² to 10 g/m². Such a woven fabric 5 is light in weight and also excellent in flexibility because of its small mass. The woven fabric 5 more preferably has a mass per unit area of 3 g/m² to 9 g/m², and further preferably has a mass per unit area of 4 g/m² to 8 g/m².

When having a mass per unit area equal to or smaller than 10 g/m², the woven fabric 5 is excellent in flexibility (texture), and the weight thereof can be reduced. When the woven fabric 5 has a mass per unit area equal to or larger than 2 g/m², distortion and slippage of yarn can be prevented, and sufficient adhesiveness can be secured even if there is a portion where waterproof tapes 10 overlap each other when the waterproof tape 10 are used for clothing.

The weave construction constituting the woven fabric 5 may be any form such as a plain weave, a twill weave, and a sateen weave, but from a viewpoint of preventing distortion and slippage of yarn in the woven fabric 5 from occurring, the woven fabric 5 is preferably the plain weave. Fig. 2 illustrates the woven fabric 5 the weave structure of which is the plain weave. In the woven fabric 5 herein, the warps 51 and/or the wefts 52 are fixed-treated with the resin A 6.

The yarn count of the warps 51 and the yarn count of the wefts 52 of the woven fabric 5 of the base fabric 2 each are preferably 5 to 20 dtex. The density (K1) of the warps 51 and the density (K2) of the wefts 52 of the woven fabric 5 each are preferably 20 to 150 counts/25.4 mm (1 inch). The sum (K1+K2) of the density of the warps 51 and the density of the wefts 52 is preferably 110 to 190 counts/25.4 mm (1 inch).

When the woven fabric 5 has a mass per unit area in a range of 4 g/m² to 8 g/m², a cover factor 400 to 480 can be achieved by the warps 51 and the wefts 52, and the weight of the woven fabric 5 can be sufficiently reduced. Furthermore, excellent flexibility and sufficient adhesive strength can be secured, and strike through can be surely prevented. The strike through herein means a phenomenon that the resin B bleeds out to the woven-fabric side when the waterproof moisture-permeable film and the woven fabric are bonded together. The cover factor can be calculated by [yarn count of warps (dtex)]^{1/2}×[density of warps (counts/25.4 mm)]+[yarn count of wefts (dtex)]^{1/2}×[density of wefts (counts/25.4 mm)].

In the woven fabric 5, a value (mass ratio, M1/M2) when mass M1 per unit area of the warps 51 is divided by mass M2 per unit area of the wefts 52 or the inverse thereof (inverse of the mass ratio, M2/M1) is preferably 1.5 to 5.0. In the woven fabric 5 having a mass ratio (M1/M2) or an inverse (M2/M1) of the mass ratio that is within the above-described range, the area of portions where warps and wefts intersect with each other (warps and wefts overlap) is smaller than that of a woven fabric in which the mass of warps and the mass of wefts are the same (M1=M2) if the mass of this woven fabric is the same as that of the woven fabric 5. In other words, the area of gaps between yarns can be smaller. This smaller gap area can prevent the resin B 7 from strike through, thereby improving the adhesiveness between the woven fabric 5 and the waterproof moisture-permeable film 3.

When M1/M2 is 1.5 to 5.0, it is preferable in the woven fabric 5 that a value (density ratio, K1/K2) when density (counts of warps per unit length (width)) K1 of warps is divided by density (counts of wefts per unit length (width)) K2 of wefts be 2.0 to 4.0. When M2/M1 is 1.5 to 5.0, it is preferable that K2/K1 be 2.0 to 4.0.

In the waterproof tape 10 including the woven fabric 5 that has M1/M2 and K1/K2 as described above, the thickness thereof can be reduced while preventing swelling of the tape, whereby the shape of the tape can be prevented from exerting influence (also referred to as "base-fabric pressure marking") on a face fabric when the waterproof tape 10 is glued on the clothing base fabric 11, which is further preferable in terms of texture on the face fabric.

Herein, the mass ratio (M1/M2) of the woven fabric 5 is preferably 1.5 to 5.0. In other words, it is preferable in the woven fabric 5 that the mass in the warp direction be larger than that in the weft direction (M1>M2).

Furthermore, it is preferable in the woven fabric 5 that the mass ratio (M1/M2) be 1.5 to 5.0 and the density ratio (K1/K2) be 2.0 to 4.0. In other words, it is preferable that the yarn count of the warps be the same or almost the same as that of the wefts and also the density K1 of the warps 51 be higher than the density K2 of the wefts 52. In this case, it is preferable that the density K1 of the warps 51 be 60 to 140 counts/25.4 mm (1 inch) and the density K2 of the wefts 52 be 30 to 110 counts/25.4 mm (1 inch).

When the mass ratio is high (M1>M2), the strength of the woven fabric 5 in the longitudinal direction required in steps until the production of the waterproof tape 10 is completed can be increased, whereby workability can be improved. Furthermore, in the waterproof tape 10 including such a woven fabric 5, flexibility in the latitudinal direction (direction orthogonal to a sewing direction (suture line 12)) can be secured, whereby deterioration in flexibility of clothing can be reduced when the waterproof tape 10 is glued on the clothing base fabric 11. In this case, it is more preferable that the density be higher in the longitudinal direction (K1>K2).

As materials of the warps 51 and the wefts 52 of the woven fabric 5, polyester, nylon, and acrylic, for example, can be used.

The following describes the waterproof moisture-permeable film 3. The waterproof moisture-permeable film 3 is a film having waterproof properties and moisture permeability. The waterproof moisture-permeable film 3, for example, can prevent rainwater intrusion from the front side, and also allows water vapor to permeate therethrough.

As the waterproof moisture-permeable film 3, a hydrophilic-resin film or a porous film made of a hydrophobic resin can be used. Examples of the hydrophilic-resin film include films using a polyurethane resin, a polyester resin, a silicone resin, and a polyvinyl alcohol resin. Examples of the porous film made of a hydrophobic resin include porous films using a fluorine-containing resin and a water-repellent polyurethane resin. The waterproof moisture-permeable film 3 is preferred to be the porous film made of a fluorine-containing resin, and is particularly preferred to be a porous polytetrafluoroethylene (PTFE) film.

Between the layers of the woven fabric 5 and the waterproof moisture-permeable film 3, the occupancy rate A of the resin A 6 is preferably 1% to 20%. Between the layers of the woven fabric 5 and the waterproof moisture-permeable film 3, the occupancy rate B of the resin B 7 is preferably 5% to 60%. The occupancy rate A of the resin A 6 herein is the area ratio of the resin A 6 per unit area of the woven fabric 5 (occupancy rate A = area occupied by resin A 6/area of woven fabric 5). The occupancy rate B of the resin B 7 is the area ratio of the resin B 7 per unit area of the waterproof moisture-permeable film 3 (occupancy rate B = area occupied by resin B 6/area of waterproof moisture-permeable film 3). Between the layers of the woven fabric 5 and the waterproof moisture-permeable film 3, the resin A 6 and the resin B 7 may partially overlap each other.

Even if the occupancy rate A is defined as the area ratio of the resin A 6 per unit area of the waterproof moisture-permeable film 3 and the occupancy rate B is defined as the area ratio of the resin B 7 per unit area of the woven fabric 5, the same result can be obtained as described above. However, these occupancy rates can be easily identified when being defined as described above.

When the occupancy rates of the resin A 6 and the resin B 7 are within these ranges, adhesiveness between the woven fabric 5 and the waterproof moisture-permeable film 3 is excellent, which makes it possible to obtain the waterproof tape 10 including the layered product 1 excellent in flexibility and moisture permeability.

On the other side of the waterproof moisture-permeable film 3, the adhesive layer is formed with the resin C 8 that is a thermoplastic resin. The mass per unit area of the adhesive layer of the resin C 8 is preferably 10 g/m² to 300 g/m², and more preferably 20 g/m² to 200 g/m².

The resin A 6, the resin B 7, and the resin C 8 will be described in a later-described section for explaining a process for producing the waterproof tape 10 according to an embodiment of the present invention.

The following describes a method of measuring and calculating the masses (M1, M2), the yarn counts, and the densities (picks, K1, K2) of warps and wefts of a woven fabric. Because it is practically difficult to measure the mass of the woven fabric 5 in the waterproof tape 10, the mass of the woven fabric 5 before the fixing treatment with the resin A (before being glued onto the waterproof moisture-permeable film 3 as a matter of course) is measured, and the mass of the woven fabric 5 of the waterproof tape 10 is calculated based on the measured mass. Because tension is applied to the woven fabric at the time of the gluing, the mass after the gluing becomes slightly smaller than the mass before the gluing (e.g., decreases by about 1 to 5%).

Measurement of the yarn counts (tex) of warps and wefts can be performed in accordance with "JIS L 1013 8.3.1 Fineness (b) B method (simple method)".

Measurement of the densities (D1, D2) of warps and wefts can be performed in accordance with "JIS L 1096 8.6.1 Density". Herein, each of the sections of the warps and the wefts is assumed to be five centimeters, and the densities each are represented by the number of yarns per 25.4 millimeters (1 inch).

Measurement of the masses of the woven fabric can be performed in accordance with "JIS L 1096 8.4.1 Method of measuring mass (corrected mass) per unit area". In measuring the masses (M1, M2) of warps and wefts, the warps and the wefts of a specimen used for measuring the mass of the woven fabric are unraveled, and the respective masses of the warps and the wefts are measured.

To calculate the mass of the woven fabric 5 of the layered products in which the waterproof moisture-permeable film 3 and the woven fabric 5 are glued together, firstly, the number of yarns in a section in the width direction (latitudinal direction) of the waterproof tape 10 is defined as the density of warps, the density in the longitudinal direction in the same section is defined as the density of wefts, and the yarn densities are represented by the number of yarns per 25.4 millimeters. Subsequently, proportional calculation to the density of the woven fabric 5 before being glued onto the waterproof moisture-permeable film is applied to obtain each of the mass of warps in the longitudinal direction and the mass of wefts in the latitudinal direction for the woven fabric 5 of the waterproof tape 10 (after the woven fabric 5 is glued onto the waterproof moisture-permeable film 3).

The following describes the process for producing the waterproof tape 10 according to an embodiment of the present invention.

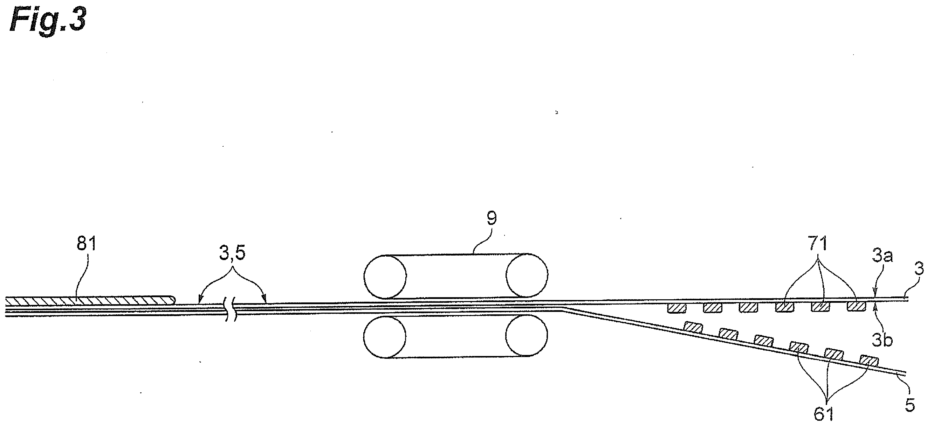

Fig. 3 is a schematic diagram illustrating the process for producing the waterproof tape according to the embodiment of the present invention. Fig. 3 is a diagram illustrating heating and pressing treatment at a laminating step. As depicted in the drawing, the heating and pressing treatment is performed at the laminating step, whereby the base fabric 2 and the waterproof moisture-permeable film 3 are boned together.

In the base fabric 2 before the heating and pressing treatment at the laminating step, the woven fabric 5 is fix-treated with a resin (a) 61 (resin A). The resin (a) 61 is a thermoset resin (a1) that is uncured or half-cured or a thermoplastic resin (a2). The melting point of the resin (a) 61 is 80°C to 160°C. The melting point herein in the present invention is a maximum temperature at the peak of heat absorption observed in thermal analysis such as DSC.

The resin (a) 61 is preferably the thermoplastic resin (a2) from viewpoints such as work efficiency of the fixing treatment of the woven fabric 5, and more preferably a thermoplastic resin crosslinked by heating from a viewpoint of adhesiveness between the woven fabric 5 and the waterproof moisture-permeable film 3. Examples of this resin include a crosslinkable acrylic resin.

An aqueous liquid containing the resin (a) 61, for example, is coated to a surface of the woven fabric 5 in a dot pattern by screen print, and is dried by heating at a temperature to the extent that the resin (a) 61 is not degraded or is air-dried, whereby the base fabric 2 is fix-treated in advance. The surface to which the resin (a) 61 is coated is a surface on the side where the waterproof moisture-permeable film 3 is glued. The movement of the warps 51 and the wefts 52 of the woven fabric 5 of the base fabric 2 is restrained by the resin (a) 61, whereby distortion and slippage of yarn in the base fabric 2 can be prevented before the laminating step and during the laminating step in which the base fabric 2 and the waterproof moisture-permeable film 3 are glued together.

Herein, the resin (a) 61 is coated to and adheres to the surface of the woven fabric 5 of the base fabric 2 in a pattern of fine particles (dot pattern), and a later-described resin (b) 71 is coated to and adheres to the waterproof moisture-permeable film 3 or the base fabric 2. Both of the adhesion shapes of the resin (a) 61 and the resin (b) 71 are referred to as a dot. The diameter of a circle having the area corresponding to the area of this dot is referred to as a particle diameter. The particle diameter can be obtained from the area measured in an image of dots that is taken with a microscope.

The particle diameter of dots of the resin A before the heating and pressing treatment at the laminating step is performed, i.e., the resin (a) 61 used for the fixing treatment, is preferably 0.1 millimeter to 2.0 millimeters, and more preferably 0.15 millimeter to 1.0 millimeter. The number of dots per unit area of the resin (a) 61 used for the fixing treatment is preferably 60 to 400 per square centimeter of the base fabric 2, and more preferably 100 to 300.

The mass of the resin A, i.e., the resin (a) 61, between the woven fabric 5 and the waterproof moisture-permeable film 3 is preferably 0.5 g/m² to 10 g/m².

When the number of dots and the particle diameter of the resin (a) 61 are within these ranges, the woven fabric 5 can be surely fixed, and further the adhesiveness between the woven fabric 5 and the waterproof moisture-permeable film 3 can be improved, whereby both of the flexibility and the permeability of the layered product 1 can be satisfied.

At the laminating step, the resin (b) 71 is coated to at least either one of the base fabric 2 and the waterproof moisture-permeable film 3. From a viewpoint of workability, it is preferable to coat the resin (b) 71 to the waterproof moisture-permeable film 3.

In the coating of the resin (b) 71, the resin (b) 71 in a powder state or a melted state is coated to the waterproof moisture-permeable film 3 in a dot pattern by gravure coating, for example. The number of dots per unit area of the resin (b) 71 between the layers of the base fabric 2 and the waterproof moisture-permeable film 3 is preferably 60 to 400 per square centimeter of the waterproof moisture-permeable film 3, and more preferably 70 to 200.

The mass of the resin B, i.e., the resin (b) 71, between the waterproof moisture-permeable film 3 and the woven fabric 5 is preferably 5 g/m² to 60 g/m².

The particle diameter of dots of the resin B 7, i.e., the resin (b) 71, before the heating and pressing treatment at the laminating step is performed is preferably 0.1 millimeter to 2.0 millimeters, and more preferably 0.5 millimeter to 1.5 millimeters. When the number of dots and the particle diameter of the resin (b) 71 are within these ranges, both the adhesiveness between the base fabric 2 and the waterproof moisture-permeable film 3 and the flexibility of the layered product 1 can be satisfied.

It should be noted that the resin (b) 71 does not have to be coated in a dot pattern at the laminating step. Specifically, at the laminating step, the resin (b) 71 may be coated to the whole surface of at least either one of the base fabric 2 and the waterproof moisture-permeable film 3. Alternatively, the resin (b) may be applied to at least either one of the base fabric 2 and the waterproof moisture-permeable film 3.

The resin (b) 71 is a thermoplastic resin that is generally used as hot-melt adhesive of acrylic or urethane, for example. The resin (b) 71 may be a thermoplastic resin that is partially crosslinked by moisture absorption or heating.

The melting point of the resin (b) 71 is preferably 60°C to 150°C, and more preferably 70°C to 140°C.

Furthermore, the melting point of the resin (b) 71 is preferably lower than the melting point of the resin (a) 61 used for the fixing treatment of the woven fabric 5 by 5°C to 40°C.

When the difference in the melting point between the resin (a) 61 and the resin (b) 71 is equal to or smaller than 5°C, occurrence of distortion and slippage of yarn may not be able to be sufficiently prevented at the laminating step. When the difference in the melting point between the resin (a) 61 and the resin (b) 71 exceeds 40°C, adhesive strength of the resin A 6 between the base fabric 2 and the waterproof moisture-permeable film 3 may decrease.

At the laminating step, after the resin (b) 71 is coated to the base fabric 2 and/or the waterproof moisture-permeable film 3, the base fabric 2 and the waterproof moisture-permeable film 3 are subjected to heating and pressing treatment. The heating and pressing treatment is performed by a roller-press pressing machine 9, for example.

Conditions for the heating and pressing treatment depend on types of the resin (a) 61 and the resin (b) 71, but it is generally preferable that heating be performed at 80°C to 120°C. The pressure for pressing at the heating and pressing treatment is preferably 0.01 MPa to 2.0 MPa. By this heating and pressing treatment, thermal curing proceeds when the resin (a) 61 is the thermoset resin (a1) that is uncured or half-cured, and the resin (a) 61 may be crosslinked when the resin (a) 61 is the thermoplastic resin (a2). Thus, as the resin A 6, while fixing at least either ones of warps and wefts of the base fabric 2, the resin (a) 61 simultaneously bonds the woven fabric 5 and the waterproof moisture-permeable film 3 together. Furthermore, by this heating and pressing treatment, the resin (b) 71 melts and, as the resin B 7, bonds the woven fabric 5 and the waterproof moisture-permeable film 3 together.

Herein, if the melting point of the resin (a) 61 is higher than the melting point of the resin (b) 71, the warps and/or the wefts of the base fabric 2 can be sufficiently fixed with the resin (a) 61 even at a temperature in which the resin (b) 71 melts, whereby occurrence of distortion and slippage of yarn in the woven fabric 5 can be sufficiently prevented at the laminating step. Furthermore, if the melting point of the resin (a) 61 is higher than the melting point of the resin (b) 71 by 5 to 40°C, adhesive strength of the resin A between the base fabric 2 and the waterproof moisture-permeable film 3 can be improved.

At an adhesive-layer forming step, a resin (c) 81 is applied to the waterproof moisture-permeable film 3. The mass of the resin C of the adhesive-resin layer 4 is preferably 10 g/m² to 300 g/m², and more preferably 20 g/m² to 200 g/m². It is preferable to apply the resin (c) 81 so that the mass of the resin C is larger than that of the resin B. Examples of a method of applying the resin (c) of the resin C include laminating by a knife coater.

The resin (c) 81 is a thermoplastic resin that is generally used as hot-melt adhesive of acrylic or urethane, for example.

The resin (c) only has to be a resin that can fill a gap generated at a joint such as a seam and a stitch of the clothing base fabric 11 (textile product) on the waterproof tape 10. Hot-melt adhesive is preferred that exhibits adhesive strength when the resin (c) is heated and melted by hot air, ultrasonic wave, or radio wave, for example, because handleability is excellent when the waterproof tape 10 is glued together.

The melting point of the resin (c) 81 before the heating and pressing treatment is preferably 60°C to 150°C, and more preferably 70°C to 140°C. Furthermore, this melting point is preferably lower than the melting point of the resin (a) 61 used for the fixing treatment of the woven fabric 5 by 5°C to 40°C.

The resin (c) may have the same resin composition as or a different resin composition from that of the resin (b), but it is preferable that the resin (c) be different from the resin (b) and the melting point of the resin (c) be lower than the melting point of the resin (b). When the resin (b) and the resin (c) are compared, the amount of the resin (b) is smaller, and thus there is no possibility that the resin (b) problematically bleeds out, for example, even when the woven fabric 5 and the waterproof moisture-permeable film 3 are glued together. Specifically, in consideration of neatly bonding without causing the resin (b) to melt when the waterproof tape 10 is bonded onto the clothing base fabric 11 (later-described bonding step) or stable workability, the melting point of the resin C is preferably lower than that of the resin B by 5°C to 40°C at the bonding step.

However, if the resin (b) is a thermoplastic resin that is partially crosslinked by moisture absorption or heating, even when the melting point of the resin (b) is the same as or slightly lower than the melting point of the resin (c), the crosslinking of the resin (b) has proceeded at and after the laminating step. Accordingly, the resin (b) does not melt when the waterproof tape 10 is bonded onto the clothing base fabric 11, so that the waterproof tape 10 can be neatly bonded.

After the adhesive-layer forming step, a slitting step is performed. At the slitting step, the layered product 1 is slit into desired widths by a known method. The width of the waterproof tape 10 is about 5 millimeters to 30 millimeters, for example. In this manner, the waterproof tape 10 can be obtained.

The following describes the bonding of the waterproof tape 10. The waterproof tape 10 is bonded so as to cover a seam 12 between clothing base fabrics 11, for example. For example, by performing heating and pressing treatment with a pressing machine or an iron, the waterproof tape 10 can be bonded onto the clothing base fabric 11. In this manner, the other side 3b of the waterproof moisture-permeable film 3 of the waterproof tape 10 and another fabric is bonded together (bonding step).

Conditions for the heating and pressing treatment at this bonding step depend on the type of the resin (c) 81, but it is desirable to melt the resin by hot air (about 600 to 800°C) of a hot-air sealer (e.g., LHA-101 manufactured by Queen Light Electronic Industries Ltd.) and perform pressure joining with rollers attached thereto. By this heating and pressing treatment, the resin (c) 81 is melted and may be partially crosslinked after the melting to obtain the resin C 8, with which the clothing base fabric 11 and the waterproof moisture-permeable film 3 are bonded together.

The conditions for the heating and pressing treatment at the bonding step may be the same as or may be different from the conditions of the heating and pressing treatment at the laminating step.

The particle diameter of the resin (a) 61 for fix-treating the base fabric 2 at the laminating step does not change so much even after the heating and pressing treatments at the laminating step and at the bonding step are performed, and only becomes larger by about 0 to 5%. The particle diameter of the resin (b) 71 that is coated to the waterproof moisture-permeable film 3 at the laminating step becomes larger by about 0 to 50% after the heating and pressing treatments at the laminating step and at the bonding step are performed.

In the waterproof tape 10 of the present embodiment, the woven fabric 5 having a mass per unit area of 2 g/m² to 10 g/m² is fixed with the resin A 6, whereby occurrence of distortion and slippage of yarn in the woven fabric 5 can be prevented. In the waterproof tape 10, the woven fabric 5 and the waterproof moisture-permeable film 3 are bonded together with the resin A 6 for fixing the woven fabric 5 and also with the thermoplastic resin B 7 that is different from the resin A 6, whereby the adhesive strength between the woven fabric 5 and the waterproof moisture-permeable film 3 is improved.

In the process for producing the waterproof tape of the present embodiment, because the laminating step of bonding and laminating the woven fabric 5 fix-treated with the resin A on the waterproof moisture-permeable film 3 is performed, occurrence of distortion and slippage of yarn in the woven fabric 5 can be prevented when the waterproof tape 10 is produced. For example, even when the woven fabric 5 having a thin thickness is used, the adhesive strength between the woven fabric 5 and the waterproof moisture-permeable film 3 is sufficiently secured.

In the foregoing, the present invention has been specifically described based on an embodiment thereof, but the present invention is not limited to the above-described embodiment. For example, in Fig. 3, the resin (b) 71 is coated to the waterproof moisture-permeable film 3, but may be coated to the base fabric 2. Furthermore, the heating and pressing treatments at the laminating step and the adhesive-layer forming step may be simultaneously performed. Furthermore, the slitting step may be performed before the adhesive-layer forming step. Furthermore, the adhesive layer made of the resin C does not have to be formed on the whole surface of one side of the waterproof moisture-permeable film as long as functions of the waterproof properties and the adhesiveness do not deteriorate.

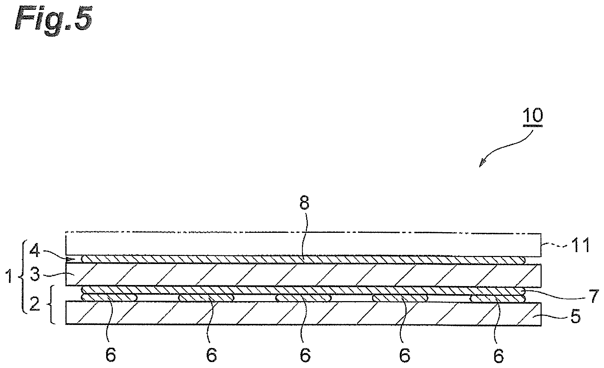

Fig. 5 is an enlarged schematic sectional view illustrating a layered product according to a second embodiment of the present invention. In the layered product 1 depicted in Fig. 1, the resin B 7 in addition to the resin A 6 adheres between the base fabric 2 and the waterproof moisture-permeable film 3 in a dot pattern. However, the layered product 1 may be one (see Fig. 5) in which an adhesion layer made of the resin B 7 is formed over the whole surface between the woven fabric 5 and the waterproof moisture-permeable film 3, or may be one in which the adhesion layer is formed over almost the whole surface. Specifically, the occupancy rate B may be 60% to 100%. In this case, the mass of the resin B 7 is preferably 10 g/m² to 60 g/m².

The waterproof tapes according to the embodiments of the present invention can be bonded onto fabrics for raincoats, windbreakers, sport garments, rain gear, tents, sleeping bags, and bags, for example. By bonding the waterproof tape so as to cover a seam of the fabric, rainwater can be prevented from coming inside from the seam.

The following describes the present invention on the basis of examples, but the present invention is not limited to the following examples.

### [Example 1]

### (Woven Fabric)

Polyester fiber yarns of (12 dtex 12 f) (composed of 12 filaments, yarn count of 12 dtex) in nominal values were woven as warps and wefts in a plain-weave construction. The resulting woven fabric was immersed in a sodium hydroxide solution for weight-reduction treatment (weight-reduction rate of about 35%), and was used as a woven fabric of Example 1. The woven fabric obtained in the weight-reduction treatment had a warp density of 101 counts/25.4 mm, a weft density of 66 counts/25.4 mm, a warp yarn count of 7.9 dtex, and a weft yarn count of 7.8 dtex.

### (fixing Treatment of Woven Fabric, Common to Examples)

An aqueous solution containing an acrylic resin having a melting point of 110°C as the resin (a) was screen-printed to this woven fabric, which was then air-dried and fix-treated. The number of dots of the acrylic resin was 250 counts/cm² and the average particle diameter was 0.2 millimeter. The mass of the resin (a) was 2 g/m².

### (Waterproof Film, Common to Examples and Comparative Examples)

A porous polytetrafluoroethylene (PTFE) film of 50 micrometers in thickness having moisture permeability was used as a waterproof film.

### (Laminating Step, Common to Examples 1 to 5, 7, and 8 and Comparative Examples 1 and 2 except Example 6)

Urethane hot-melt adhesive (melting point of 90°C) in a melted state that is crosslinked by moisture absorption was gravure-coated as the resin (b) to the waterproof film.

The number of dots of the resin (b) was 100 counts/cm² and the average particle diameter was 0.7 millimeter. The mass of the resin (b) was 30 g/m².

The woven fabric as a fix-treated base fabric, the fix-treated side of which faces the waterproof film, the waterproof film, and the resin (b) interposed therebetween are subjected to heating and pressing treatment at 110°C and 0.02 MPa, whereby both of the woven fabric and the waterproof film were bonded together to obtain a two-layer laminate.

### (Adhesive-Layer Forming Step, Common to Examples and Comparative Examples)

Urethane hot-melt adhesive (melting point of 80°C) in a melted state was applied as the resin (c) to the other side of the waterproof film so that the mass became 40 g/m² over the whole surface of one side of the waterproof film. In this manner, a two-layer laminate 1 having an adhesive layer on one side thereof was obtained.

### (Slitting Step, Common to Examples and Comparative Examples)

The layered product 1 was slit in the warp direction into a width (length in the direction orthogonal to the warps) of 1.5 centimeters to obtain a waterproof tape 10.

### (Clothing Base Fabric, Common to Examples and Comparative Examples)

The clothing base fabric 11 is a fabric onto which the waterproof tape 10 is bonded. Two sheets of fabric were prepared by applying 30 g/m² of the resin (b) to both sides of the waterproof film and gluing fabrics (mass of 60 g/m²) made of polyester fibers in a plain-weave construction to both sides of the waterproof film. These two sheets of fabric were sewed together with portions thereof being overlapped to obtain a clothing base fabric.

### (Bonding Step, Common to Examples and Comparative Examples)

Each of waterproof tapes of Examples and Comparative Examples is glued on one side of the sewed portion of the clothing base fabric by a hot-air sealer.

### [Example 2]

Polyester fiber yarns of (12 dtex 12 f) (composed of 12 filaments, yarn count of 12 dtex) in nominal values were woven as warps and wefts in a plain-weave construction. The resulting woven fabric was immersed in a sodium hydroxide solution for weight-reduction treatment (weight-reduction rate of about 10%), and was used as a woven fabric of Example 2. The woven fabric obtained in the weight-reduction treatment had a warp density of 98 counts/25.4 mm, a weft density of 42 counts/25.4 mm, a warp yarn count of 10.6 dtex, and a weft yarn count of 10.8 dtex. The others (fixing treatment of the woven fabric, waterproof film, laminating step, adhesive-layer forming step, slitting step, clothing base fabric, and bonding step) are the same as those of Example 1.

### [Example 3]

Polyester fiber yarns of (12 dtex 12 f) (composed of 12 filaments, yarn count of 12 dtex) in nominal values were woven as warps and wefts in a plain-weave construction. The resulting woven fabric was immersed in a sodium hydroxide solution for weight-reduction treatment (weight-reduction rate of about 10%), and was used as a woven fabric of Example 3. The woven fabric obtained in the weight-reduction treatment had a warp density of 100 counts/25.4 mm, a weft density of 46 counts/25.4 mm, a warp yarn count of 10.7 dtex, and a weft yarn count of 10.8 dtex. The others (fixing treatment of the woven fabric, waterproof film, laminating step, adhesive-layer forming step, slitting step, clothing base fabric, and bonding step) are the same as those of Example 1.

### [Example 4]

Polyester fiber yarns of (7.8 dtex 12 f) (composed of 12 filaments, yarn count of 7.8 dtex) in nominal values were woven as warps and wefts in a plain-weave construction. The resulting woven fabric was used as a woven fabric of Example 4 without being subjected to the weight-reduction treatment. The woven fabric thus obtained had a warp density of 99 counts/25.4 mm and a weft density of 61 counts/25.4 mm, and the warp yarn count and the weft yarn count each were 7.8 dtex. The others (fixing treatment of the woven fabric, waterproof film, laminating step, adhesive-layer forming step, slitting step, clothing base fabric, and bonding step) are the same as those of Example 1.

### [Example 5]

Polyester fiber yarns of (12 dtex 12 f) (composed of 12 filaments, yarn count of 12 dtex) in nominal values were woven as warps and wefts in a plain-weave construction. The resulting woven fabric was used as a woven fabric of Example 5 without being subjected to the weight-reduction treatment. The woven fabric thus obtained had a warp density of 98 counts/25.4 mm and a weft density of 42 counts/25.4 mm, a warp yarn count of 12.3 dtex, and a weft yarn count of 12.5 dtex. The others (fixing treatment of the woven fabric, waterproof film, laminating step, adhesive-layer forming step, slitting step, clothing base fabric, and bonding step) are the same as those of Example 1.

### [Example 6]

The same woven fabric as that of Example 1 was used as a woven fabric of Example 6. The woven fabric obtained in the weight-reduction treatment was the same as that of Example 1, and had a warp density of 101 counts/25.4 mm, a weft density of 66 counts/25.4 mm, a warp yarn count of 7.9 dtex, and a weft yarn count of 7.8 dtex.

### (Laminating Step, Example 6)

Urethane hot-melt adhesive (melting point of 80°C) in a melted state that was the same as that of Example 1 was applied as the resin (b) to the waterproof film over the whole surface of one side of the waterproof film.

The mass of the resin (b) was 40 g/m².

The woven fabric as a fix-treated base fabric, the fix-treated side of which faces the waterproof film, the waterproof film, and the resin (b) interposed therebetween are subjected to heating and pressing treatment at 110°C and 0.02 MPa, whereby both of the woven fabric and the waterproof film were bonded together to obtain a two-layer laminate.

The others (fixing treatment of the woven fabric, waterproof film, adhesive-layer forming step, slitting step, clothing base fabric, and bonding step) are the same as those of Example 1.

### [Example 7]

Polyester fiber yarns of (12 dtex 12 f) (composed of 12 filaments, yarn count of 12 dtex) in nominal values were woven as warps and wefts in a plain-weave construction. The resulting woven fabric was immersed in a sodium hydroxide solution for weight-reduction treatment (weight-reduction rate of about 35%), and was used as a woven fabric of Example 7. The woven fabric obtained in the weight-reduction treatment had a warp density of 80 counts/25.4 mm, a weft density of 80 counts/25.4 mm, a warp yarn count of 7.8 dtex, and a weft yarn count of 7.9 dtex. The others (fixing treatment of the woven fabric, waterproof film, laminating step, adhesive-layer forming step, slitting step, clothing base fabric, and bonding step) are the same as those of Example 1.

### [Example 8]

Polyester fiber yarns of (12 dtex 12 f) (composed of 12 filaments, yarn count of 12 dtex) in nominal values were woven as warps and wefts in a plain-weave construction. The resulting woven fabric was immersed in a sodium hydroxide solution for weight-reduction treatment (weight-reduction rate of about 10%), and was used as a woven fabric of Example 8. The woven fabric obtained in the weight-reduction treatment had a warp density of 70 counts/25.4 mm, a weft density of 70 counts/25.4 mm, a warp yarn count of 10.9 dtex, and a weft yarn count of 10.9 dtex. The others (fixing treatment of the woven fabric, waterproof film, laminating step, adhesive-layer forming step, slitting step, clothing base fabric, and bonding step) are the same as those of Example 1.

### [Comparative Example 1]

The same woven fabric as that of Example 1 was used as a woven fabric of Comparative Example 1. In Comparative Example 1, the fixing treatment of the woven fabric was not performed. The others (waterproof film, laminating step, adhesive-layer forming step, slitting step, clothing base fabric, and bonding step) are the same as those of Example 1.

### [Comparative Example 2]

The same woven fabric as that of Example 5 was used as a woven fabric of Comparative Example 2. In Comparative Example 2, the fixing treatment of the woven fabric was not performed. The others (waterproof film, laminating step, adhesive-layer forming step, slitting step, clothing base fabric, and bonding step) are the same as those of Example 1 (Example 5).

### (Appearance Evaluation)

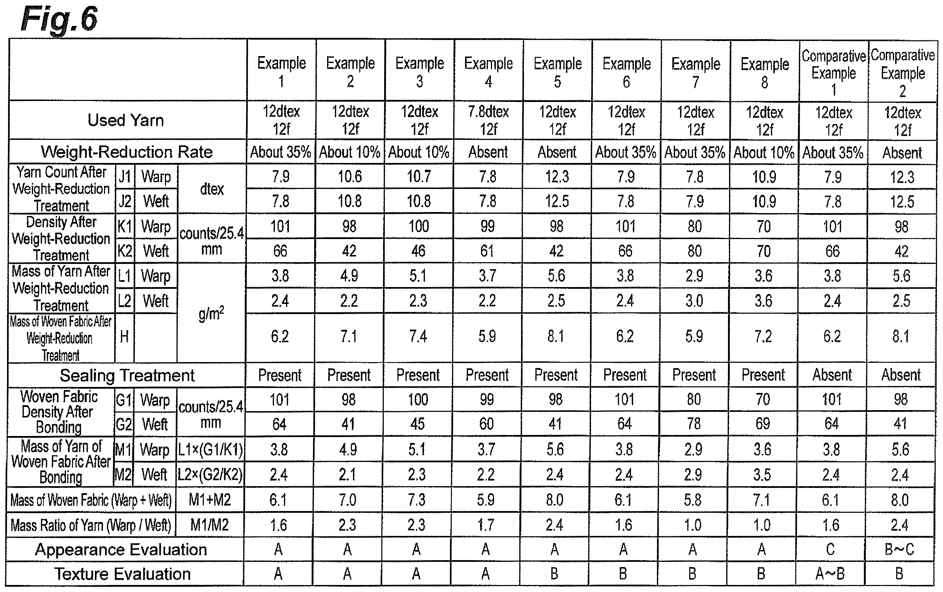

Appearance evaluation was performed on Examples 1 to 8 and Comparative Examples 1 and 2. In the appearance evaluation, each waterproof tape was visually observed from the side of the woven fabric to check distortion and slippage of yarn in the woven fabric. In the results of the appearance evaluation, "no problem at all" was rated as "A", "occurrence of distortion and slippage of yarn found, but no problem for practical use" was rated as "B", and "occurrence of distortion and slippage of yarn found, resulting in practical problems" was rated as "C". The results of the appearance evaluation are given in Fig. 6. The results of the appearance evaluation on Examples 1 to 8 were all "A". Comparative Example 1 scored "C", and Comparative Example 2 scored "B" or "C".

### (Texture Evaluation)

Texture evaluation was performed on Examples 1 to 8 and Comparative Examples 1 and 2. In the texture evaluation, flexibility of the sewed portion of a clothing base fabric was evaluated after each waterproof tape was glued on the clothing base fabric. In the results of the texture evaluation, "no problem at all as thin waterproof clothing for practical use" was rated as "A", "more flexibility required, but no problem for practical use" was rated as "B", and "hardness found, resulting in practical problems as thin waterproof clothing (poor flexibility)" was rated as "C". The results of the texture evaluation are given in Fig. 6. The results of the appearance evaluation on Examples 1 to 4 were "A". Examples 5 to 8 and Comparative Example 2 scored "B", and Comparative Example 1 scored "A" or "B". Comparative Example 1 exhibited conspicuous distortion and slippage of yarn in the woven fabric, and accordingly is considered to have had a worse result than Example 1 also in the texture evaluation.

### (Evaluation of Adhesiveness)

Adhesiveness between the woven fabric and the waterproof film in each waterproof tape and adhesiveness between the clothing base fabric and the waterproof tape were so sufficient in each of the examples and the comparative examples that no problem occurred for practical use. However, Comparative Example 1 was slightly inferior to Example 1, and Comparative Example 2 was slightly inferior to Example 5.

It was found in Examples 1 to 8 and Comparative Example 2 that the melting point of the resin (a) was not able to be accurately measured after the heating and pressing treatment after the laminating step, and the resin (a) was partially crosslinked. It was also found that the melting point of the urethane hot-melt adhesive used as the resin (b) did not significantly change immediately after the preparation of the layered product, but the melting point was not able to be accurately measured after the elapse of one week, and the urethane hot-melt adhesive was crosslinked. It is considered that this crosslinking occurred because the resin (b) was urethane hot-melt adhesive that was a type to be crosslinked by moisture absorption.

### Industrial Applicability

According to the present invention, it is possible to provide a waterproof tape and a process for producing the waterproof tape that enable weight reduction while preventing distortion and slippage of yarn in a woven fabric from occurring when a waterproof film and the woven fabric are bonded together and also securing adhesive strength between the waterproof film and the woven fabric.

### Reference Signs List

1... layered product, 2... base fabric, 3... waterproof moisture-permeable film, 3a... one side, 3b... the other side, 4... adhesive-resin layer (adhesive layer), 5... woven fabric, 6... resin A, 7... thermoplastic resin B, 8... resin C, 9... pressing machine, 10... waterproof tape, 11... clothing base fabric, 61... resin (a), 71... resin (b), 81... resin (c)

## Claims

1. A waterproof tape comprising:
a layered product in which a base fabric is laminated on one side of a waterproof film and an adhesive layer is formed on the other side of the waterproof film, wherein
the base fabric is a woven fabric that has a mass per unit area of 2 g/m² to 10 g/m² and is fixed with a resin A in a dot pattern,
the resin A is any of a resin formed by curing a resin (a1), a resin (a2), or a resin formed by crosslinking the resin (a2),
the woven fabric and the waterproof film are bonded together with the resin A and a thermoplastic resin B,
the adhesive layer is formed of a thermoplastic resin C,
the resin (a1) is a thermoset resin that is uncured or half-cured and has a melting point of 80°C to 160°C,
the resin (a2) is a thermoplastic resin having a melting point of 80°C to 160°C, and
a melting point of the thermoplastic resin B is lower than the melting point of the resin A by 5°C to 40°C.

2. The waterproof tape according to claim 1, wherein
an occupancy rate A that is a ratio of an area of the resin A per unit area is 1 % to 20%.

3. The waterproof tape according to any one of claim 1 or 2, wherein
an occupancy rate B that is a ratio of an area of the thermoplastic resin B per unit area is 5% to 60%, and
the thermoplastic resin B bonds the woven fabric and the waterproof film together in a dot pattern.

4. The waterproof tape according to any one of claims 1 to 3, wherein
a value (M1/M2) when mass M1 of warps extending in a longitudinal direction of the woven fabric is divided by mass M2 of wefts extending in a latitudinal direction of the woven fabric or an inverse (M2/M1) of the value is 1.5 to 5.0.

5. A process for producing the waterproof tape, including a layered product in which a base fabric is laminated on one side of a waterproof film and an adhesive layer is formed on the other side of the waterproof film, according to any one of claims 1 to 4, the process comprising:
a laminating step of laminating together the base fabric that is a woven fabric having a mass per unit area of 2 g/m² to 10 g/m² fixed with a resin A in a dot pattern and one side of the waterproof film by bonding the base fabric and the waterproof film together with the resin A having a dot pattern and a thermoplastic resin B;
an adhesive-layer forming step of forming the adhesive layer by applying a thermoplastic resin C to the other side of the waterproof film; and
a slitting step of slitting the layered product into desired widths.

## Patentansprüche

1. Ein wasserbeständiges Band, umfassend:
ein Schichtprodukt, in dem ein Grundtextilmaterial auf einer Seite eines wasserbeständigen Films laminiert ist und eine Klebstoffschicht auf der anderen Seite des wasserbeständigen Films gebildet ist, wobei
das Grundtextilmaterial ein Gewebe ist, das ein Gewicht pro Flächeneinheit von 2 g/m² bis 10 g/m² aufweist und mit einem Harz A in einem Punktmuster befestigt ist,
das Harz A ein beliebiges Harz ist, das durch Härten eines Harzes (a1) oder eines Harzes (a2) gebildet ist, oder ein Harz ist, das durch Vernetzen des Harzes (a2) gebildet ist,
das Gewebe und der wasserbeständige Film mit dem Harz A und einem thermoplastischen Harz B zusammengebunden sind,
die Klebstoffschicht aus einem thermoplastischen Harz C gebildet ist,
das Harz (a1) ein wärmehärtendes Harz ist, das ungehärtet oder teilweise gehärtet ist und einen Schmelzpunkt von 80°C bis 160°C aufweist,
das Harz (a2) ein thermoplastisches Harz mit einem Schmelzpunkt von 80°C bis 160°C ist, und
ein Schmelzpunkt des thermoplastischen Harzes B um 5°C bis 40°C niedriger als der Schmelzpunkt des Harzes A liegt.

2. Das wasserbeständige Band gemäß Anspruch 1, wobei
eine Besetzungsrate A, die eine Rate der Fläche des Harzes A pro Flächeneinheit ist, 1% bis 20% beträgt.

3. Das wasserbeständige Band gemäß Anspruch 1 oder 2, wobei
eine Besetzungsrate B, die eine Rate der Fläche des thermoplastischen Harzes B pro Flächeneinheit ist, 5% bis 60% beträgt, und
das thermoplastische Harz B das Gewebe und den wasserbeständigen Film in einem Punktmuster zusammenbindet.

4. Das wasserbeständige Band gemäß einem der Ansprüche 1 bis 3, wobei
ein Wert (M1/M2), wenn das Gewicht M1 von Kettenfäden, die sich in einer Längsrichtung des Gewebes erstrecken, geteilt wird durch das Gewicht M2 von Schussfäden, die sich in einer Breitenrichtung des Gewebes erstrecken, oder ein Kehrwert (M2/M1) des Werts, 1,5 bis 5,0 beträgt.

5. Ein Verfahren zur Herstellung des wasserbeständigen Bands, umfassend ein Schichtprodukt, in dem ein Grundtextilmaterial auf einer Seite eines wasserbeständigen Films laminiert ist und eine Klebstoffschicht auf der anderen Seite des wasserbeständigen Films gebildet ist, gemäß einem der Ansprüche 1 bis 4, wobei das Verfahren umfasst:
einen Laminierungsschritt des Zusammenlaminierens des Grundtextilmaterials, das ein Gewebe mit einem Gewicht pro Flächeneinheit von 2 g/m² bis 10 g/m² ist, das mit einem Harz A in einem Punktmuster befestigt ist, und einer Seite des wasserbeständigen Films durch Zusammenbinden des Grundtextilmaterials und des wasserbeständigen Films mit dem Harz A mit einem Punktmuster und einem thermoplastischen Harz B;
einen Schritt des Bildens einer Klebstoffschicht durch Aufbringen eines thermoplastischen Harzes C auf der anderen Seite des wasserbeständigen Films; und
einen Schneideschritt des Schneidens des Schichtprodukts in die gewünschten Breiten.

## Revendications

1. Ruban résistant à l'eau comprenant :
un produit en couches dans lequel un textile de base est stratifié sur une face d'un film résistant à l'eau et une couche adhésive est formée sur l'autre face du film résistant à l'eau, dans lequel
le textile de base est un textile tissé qui a une masse par unité d'aire de 2 g/m² à 10 g/m² et est fixé avec une résine A en un motif de points,
la résine A est l'une quelconque parmi une résine formée par durcissement d'une résine (a1), d'une résine (a2), ou d'une résine formée par réticulation de la résine (a2),
le textile tissé et le film résistant à l'eau sont liés l'un à l'autre avec la résine A et une résine thermoplastique B,
la couche adhésive est formée d'une résine thermoplastique C,
la résine (a1) est une résine thermodurcissable qui est non durcie ou semi-durcie et possède un point de fusion de 80 °C à 160 °C,
la résine (a2) est une résine thermoplastique ayant un point de fusion de 80 °C à 160 °C, et
un point de fusion de la résine thermoplastique B est inférieur au point de fusion de la résine A de 5 °C à 40 °C.

2. Ruban résistant à l'eau selon la revendication 1, dans lequel un taux d'occupation A qui est un rapport d'une aire de la résine A par unité d'aire est de 1 % à 20 %.

3. Ruban résistant à l'eau selon l'une quelconque des revendications 1 ou 2, dans lequel un taux d'occupation B qui est un rapport d'une aire de la résine thermoplastique B par unité d'aire est de 5 % à 60 %, et
la résine thermoplastique B lie le textile tissé et le film résistant à l'eau conjointement en un motif de points.

4. Ruban résistant à l'eau selon l'une quelconque des revendications 1 à 3, dans lequel une valeur (M1/M2) quand la masse M1 des fils de chaînes s'étendant dans un sens de la longitude du textile tissé est divisée par la masse M2 des fils de trames s'étendant dans un sens de la latitude du textile tissé ou un inverse (M2/M1) de la valeur est de 1,5 à 5,0.

5. Procédé de production du ruban résistant à l'eau, comprenant un produit en couches dans lequel un textile de base est stratifié sur une face d'un film résistant à l'eau et une couche adhésive est formée sur l'autre face du film résistant à l'eau, selon l'une quelconque des revendications 1 à 4, le procédé comprenant :
une étape de stratification consistant à stratifier conjointement le textile de base qui est un textile tissé ayant une masse par unité d'aire de 2 g/m² à 10 g/m² fixé par une résine A en un motif de points et une face du film résistant à l'eau par liaison du textile de base et du film résistant à l'eau conjointement avec la résine A ayant un motif de points et une résine thermoplastique B ;
une étape de formation de la couche adhésive consistant à former la couche adhésive par application d'une résine thermoplastique C sur l'autre face du film résistant à l'eau ; et
une étape de cisaillage consistant à cisailler le produit en couches en largeurs désirées.
